# EUROPEAN PATENT APPLICATION

(11) **EP 4 749 691 A1**
(43) Date of publication of application: **27.05.2026**
(21) Application number: 25209852.0
(22) Date of filing: 20.10.2025
(51) Int. Cl.: H01M 4/04

(54) **DRY ELECTRODE FABRICATING APPARATUS AND METHOD**

(30) Priority: 22.11.2024 KR 20240168574
(71) Applicant: SAMSUNG SDI CO., LTD., Yongin-si, Gyeonggi-do 17084 (KR)
(72) Inventor: KWON, Il Kyong, Suwon-si, Gyeonggi-do 16678 (KR); CHO, Chae Woong, Suwon-si, Gyeonggi-do 16678 (KR); YU, Hong Ryeol, Suwon-si, Gyeonggi-do 16678 (KR); JO, Jae Ho, Suwon-si, Gyeonggi-do 16678 (KR); JUNG, Sung Min, Suwon-si, Gyeonggi-do 16678 (KR)
(74) Representative: Gulde & Partner

(57) **Abstract**

A dry electrode fabricating apparatus and method are disclosed. A dry electrode fabricating apparatus includes a chute including an inner space in which an electrode powder is accommodated, an inlet port through which the electrode powder is input to the inner space, and an outlet port through which the electrode powder is discharged from the inner space, a pair of calender rolls through which the electrode powder discharged through the outlet port passes and by which the electrode powder is compressed into an electrode film, a temperature sensor to measure a temperature of the chute, a chute moving part, and a controller configured to control the chute moving part such that the chute-calender roll distance becomes greater than a reference distance if the temperature of the chute is higher than or equal to a reference temperature.

## Description

### BACKGROUND

### 1. Field

Aspects of embodiments of the present disclosure relate to a dry electrode fabricating apparatus and method.

### 2. Description of the Related Art

Electrodes of secondary batteries may be divided into wet electrodes and dry electrodes. A wet electrode may be fabricated through a process of coating a current collector with a slurry prepared by mixing an electrode active material, a conductive material, and a binder with an organic solvent and drying the coated current collector to remove the organic solvent.

A dry electrode may be fabricated by mixing an electrode active material, a conductive material, and a binder without an organic solvent and attaching the mixed material to a current collector. Since the organic solvent is not used for fabricating the dry electrode, the dry electrode is eco-friendly, and since an apparatus and process for drying a slurry are not required, costs for fabricating the electrode can be reduced, and productivity can be improved.

The aforementioned information disclosed in this background section is provided for enhancement of understanding of the background technology of the present disclosure, and therefore may contain information that does not constitute the related art.

### SUMMARY

According to an aspect of embodiments of the present invention, a dry electrode fabricating apparatus and method are provided, which prevent or substantially prevent a phenomenon in which an electrode powder is agglomerated in a chute due to heat transferred from a heated calender roll to the chute.

However, aspects and technical objectives to be achieved by the present disclosure are not limited to the above-described aspects and objectives, and other aspects and objectives, which are not described above, may be clearly understood by those skilled in the art through the following description of the disclosure.

According to one or more embodiments of the present invention, a dry electrode fabricating apparatus includes a chute including an inner space in which an electrode powder is accommodated, an inlet port through which the electrode powder is input to the inner space, and an outlet port through which the electrode powder is discharged from the inner space, a pair of calender rolls through which the electrode powder discharged through the outlet port passes and by which the electrode powder is compressed into an electrode film, a temperature sensor to measure a temperature of the chute, a chute moving part configured to support the chute and move the chute to change a chute-calender roll distance between the chute and each of the pair of calender rolls, and a controller configured to control the chute moving part such that the chute-calender roll distance becomes greater than a certain (e.g., preset) reference distance when the temperature of the chute is greater than or equal to a certain (e.g., preset) reference temperature.

The chute-calender roll distance may have a minimum value of a distance at which an outer circumferential surface of the calender roll is spaced apart from the chute in a moving direction of the chute.

The chute-calender roll distance may increase in proportion to an increase in temperature of the chute.

The chute may include a curved corner concavely recessed to have a curvature corresponding to a curvature of an outer circumferential surface of the calender roll, and the chute may include a protection layer which is stacked on the curved corner to prevent damage to the calender roll.

The protection layer may include a fluorine-based resin or rubber.

The dry electrode fabricating apparatus may further include a cooling jacket to allow a refrigerant to flow around the chute to cool the chute.

The refrigerant may be air or liquid water.

The dry electrode fabricating apparatus may further include a trimming part, or trimmer, configured to cut an end portion of the electrode film in a width direction and separate a scrap from the electrode film, and a scrap suction part to suction the scrap.

The dry electrode fabricating apparatus may further include an electrode powder supplier configured to supply the electrode powder to the inner space through the inlet port, and a level detection sensor to detect whether a deposit level at which the electrode powder is deposited in the inner space reaches a certain (e.g., preset) reference level.

The level detection sensor may be provided as a plurality of level detection sensors, and the plurality of level detection sensors may be installed at a plurality of points of which levels are different in the chute.

According to one or more embodiments of the present invention, a dry electrode fabricating method includes an electrode film forming operation of discharging an electrode powder accommodated in an inner space of a chute from the chute and allowing the electrode powder to pass through a gap between a pair of calender rolls to form an electrode film, a temperature measuring operation of measuring a temperature of the chute while forming the electrode film, and a chute-calender roll distance increasing operation of, if the temperature of the chute is greater than a certain (e.g., preset) reference temperature, moving the chute such that a chute-calender roll distance between the chute and each of the pair of calender rolls becomes greater than a certain (e.g., preset) reference distance.

The dry electrode fabricating method may further include a chute cooling operation of, if the temperature of the chute is greater than the certain reference temperature, allowing a refrigerant to flow around the chute to cool the chute.

The dry electrode fabricating method may further include a temperature remeasuring operation of remeasuring a temperature of the chute after the chute-calender roll distance increasing operation and a chute-calender roll distance decreasing operation of, if the temperature of the chute measured in the temperature remeasuring operation is lower than the reference temperature, moving the chute such that the chute-calender roll distance becomes the same as the reference distance.

The dry electrode fabricating method may further include a deposit level measuring operation of measuring a deposit level at which the electrode powder is deposited in the inner space and an electrode powder supply stop operation of, if the deposit level is greater than or equal to the certain reference level, stopping supply of the electrode powder to the inner space.

The dry electrode fabricating method may further include a trimming operation of cutting an end portion of the electrode film in a width direction and separating a scrap from the electrode film and a scrap suction operation of suctioning the scrap, wherein the scrap suction operation may include an operation of, if the chute-calender roll distance becomes greater than the reference distance, increasing a suction force for suctioning the scrap to be greater than the suction force if the chute-calender roll distance is the reference distance.

### BRIEF DESCRIPTION OF THE DRAWINGS

The above and other objects, features and advantages of the present disclosure will become more apparent to those of ordinary skill in the art by describing some example embodiments thereof in further detail with reference to the accompanying drawings, in which:
FIG. 1 is a configuration diagram illustrating a dry electrode fabricating apparatus according to an embodiment of the present invention;
FIG. 2 is a perspective view illustrating a chute and a pair of calender rolls of the dry electrode fabricating apparatus of FIG. 1;
FIG. 3 is an enlarged view illustrating a region "B" of FIG. 2;
FIG. 4 is a cross-sectional view illustrating the chute and a cooling jacket, taken along the line S1-S1 of FIG. 2;
FIG. 5 is an enlarged view illustrating a region "C" of FIG. 4;
FIG. 6 is an enlarged view illustrating a region "A" of FIG. 1, which illustrates a state in which a chute-calender roll distance is a reference distance;
FIG. 7 is a view corresponding to FIG. 6, which illustrates a state in which the chute-calender roll distance increases further than the reference distance;
FIG. 8 is a block diagram illustrating a dry electrode fabricating method according to an embodiment of the present invention;
FIG. 9 is a block diagram illustrating an electrode powder supply control operation of FIG. 8; and
FIG. 10 is a block diagram illustrating a trimming control operation of FIG. 8.

### DETAILED DESCRIPTION

Herein, some embodiments of the present disclosure will be described, in further detail, with reference to the accompanying drawings. The terms or words used in this specification and claims are not to be construed as being limited to the usual or dictionary meaning and are to be interpreted as having meaning and concept consistent with the technical idea of the present disclosure based on the principle that the inventor can be his/her own lexicographer to appropriately define the concept of the term.

The embodiments described in this specification and the configurations shown in the drawings are provided as some example embodiments of the present disclosure and do not necessarily represent all of the technical ideas, aspects, and features of the present disclosure. Accordingly, it is to be understood that there may be various equivalents and modifications that may replace or modify the embodiments described herein at the time of filing this application.

It is to be understood that when an element or layer is referred to as being "on," "connected to," or "coupled to" another element or layer, it may be directly on, connected, or coupled to the other element or layer, or one or more intervening elements or layers may also be present. When an element or layer is referred to as being "directly on," "directly connected to," or "directly coupled to" another element or layer, there are no intervening elements or layers present. For example, when a first element is described as being "coupled" or "connected" to a second element, the first element may be directly coupled or connected to the second element, or the first element may be indirectly coupled or connected to the second element via one or more intervening elements.

In the figures, dimensions of the various elements, layers, etc. may be exaggerated for clarity of illustration. The same reference numerals designate the same or like elements. As used herein, the term "and/or" includes any and all combinations of one or more of the associated listed items. Further, the use of "may" when describing embodiments of the present disclosure relates to "one or more embodiments of the present disclosure." Expressions, such as "at least one of" and "any one of," when preceding a list of elements, modify the entire list of elements and do not modify the individual elements of the list. When phrases such as "at least one of A, B, and C," "at least one of A, B, or C," "at least one selected from a group of A, B, and C," or "at least one selected from among A, B, and C" are used to designate a list of elements A, B, and C, the phrase may refer to any and all suitable combinations or a subset of A, B, and C, such as A, B, C, A and B, A and C, B and C, or A and B and C. As used herein, the terms "use," "using," and "used" may be considered synonymous with the terms "utilize," "utilizing," and "utilized," respectively. As used herein, the terms "substantially," "about," and similar terms are used as terms of approximation and not as terms of degree, and are intended to account for the inherent variations in measured or calculated values that would be recognized by those of ordinary skill in the art.

It is to be understood that, although the terms "first," "second," "third," etc. may be used herein to describe various elements, components, regions, layers, and/or sections, these elements, components, regions, layers, and/or sections are not to be limited by these terms. These terms are used to distinguish one element, component, region, layer, or section from another element, component, region, layer, or section. Thus, a first element, component, region, layer, or section discussed below could be termed a second element, component, region, layer, or section without departing from the teachings of example embodiments.

Spatially relative terms, such as "beneath," "below," "lower," "above," "upper," and the like, may be used herein for ease of description to describe one element or feature's relationship to another element(s) or feature(s) as illustrated in the figures. It is to be understood that the spatially relative terms are intended to encompass different orientations of the device in use or operation in addition to the orientation depicted in the figures. For example, if the device in the figures is turned over, elements describe d as "below" or "beneath" other elements or features would then be oriented "above" or "over" the other elements or features. Thus, the term "below" may encompass both an orientation of above and below. The device may be otherwise oriented (e.g., rotated 90 degrees or at other orientations), and the spatially relative descriptors used herein should be interpreted accordingly.

The terminology used herein is for the purpose of describing embodiments of the present disclosure and is not intended to be limiting of the present disclosure. As used herein, the singular forms "a" and "an" are intended to include the plural forms as well, unless the context clearly indicates otherwise. It is to be further understood that the terms "includes," "including," "comprises," and/or "comprising," when used in this specification, specify the presence of stated features, integers, steps, operations, elements, and/or components but do not preclude the presence or addition of one or more other features, integers, steps, operations, elements, components, and/or groups thereof.

Also, any numerical range disclosed and/or recited herein is intended to include all sub-ranges of the same numerical precision subsumed within the recited range. For example, a range of "1.0 to 10.0" is intended to include all subranges between (and including) the recited minimum value of 1.0 and the recited maximum value of 10.0, that is, having a minimum value equal to or greater than 1.0 and a maximum value equal to or less than 10.0, such as, for example, 2.4 to 7.6. Any maximum numerical limitation recited herein is intended to include all lower numerical limitations subsumed therein, and any minimum numerical limitation recited in this specification is intended to include all higher numerical limitations subsumed therein. Accordingly, Applicant reserves the right to amend this specification, including the claims, to expressly recite any sub-range subsumed within the ranges expressly recited herein.

References to two compared elements, features, etc. as being "the same" may mean that they are the same or substantially the same. Thus, the phrase "the same" or "substantially the same" may include a case having a deviation that is considered low in the art, for example, a deviation of 5% or less. In addition, when a certain parameter is referred to as being uniform in a given region, it may mean that it is uniform in terms of an average.

Throughout the specification, unless otherwise stated, each element may be singular or plural.

When an arbitrary element is referred to as being arranged (or located or positioned) on the "above (or below)" or "on (or under)" a component, it may mean that the arbitrary element is placed in contact with the upper (or lower) surface of the component and may also mean that another component may be interposed between the component and any arbitrary element arranged (or located or positioned) on (or under) the component.

In addition, it is to be understood that when an element is referred to as being "coupled," "linked," or "connected" to another element, the elements may be directly "coupled," "linked," or "connected" to each other, or one or more intervening elements may be present therebetween, through which the element may be "coupled," "linked," or "connected" to another element. In addition, when a part is referred to as being "electrically coupled" to another part, the part may be directly electrically connected to another part, or one or more intervening parts may be present therebetween such that the part and the another part are indirectly electrically connected to each other.

Throughout the specification, when "A and/or B" is stated, it means A, B, or A and B, unless otherwise stated. That is, "and/or" includes any or all combinations of a plurality of items enumerated. When "C to D" is stated, it means C or more and D or less, unless otherwise specified.

The terms used in the present specification are for describing embodiments of the present disclosure and are not intended to limit the present disclosure.

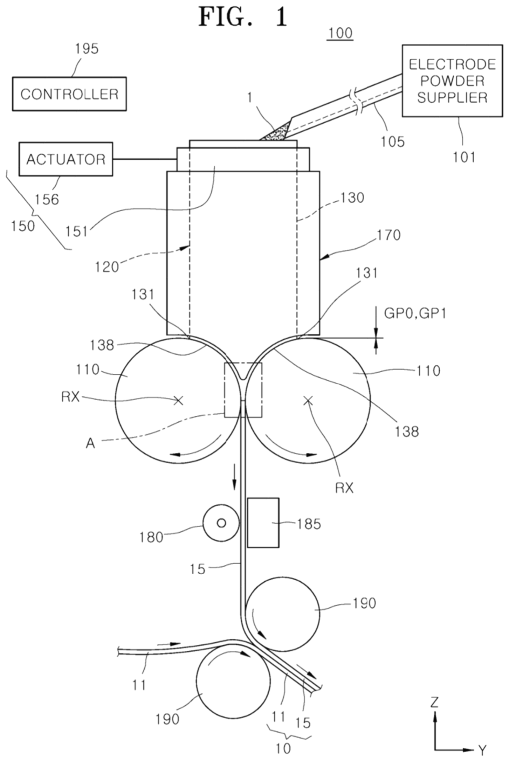

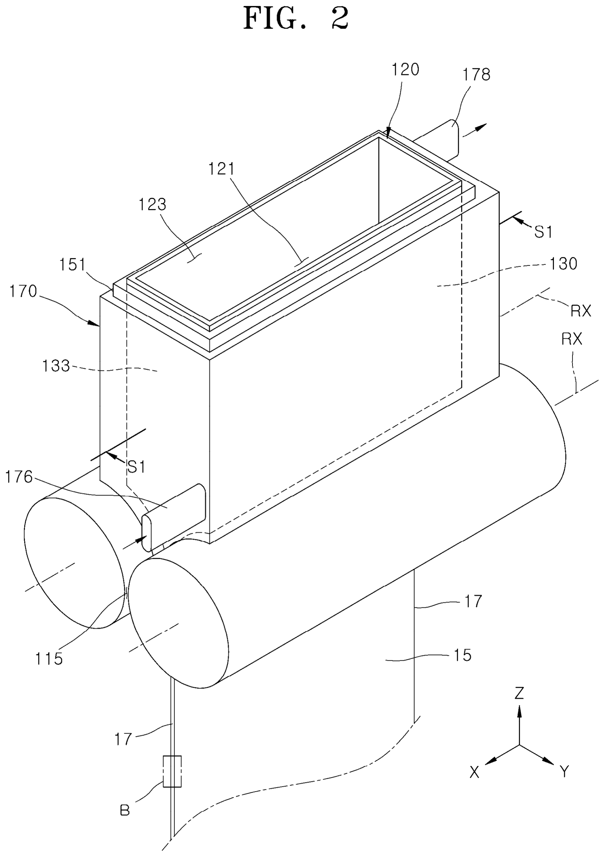

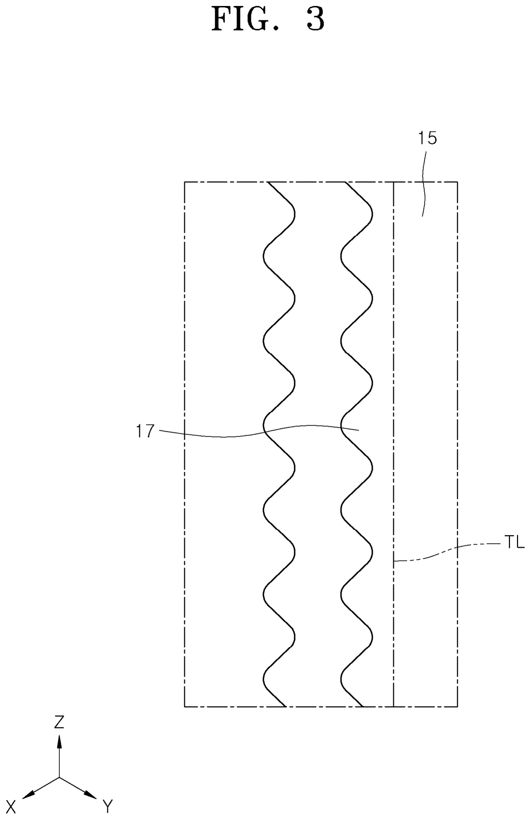

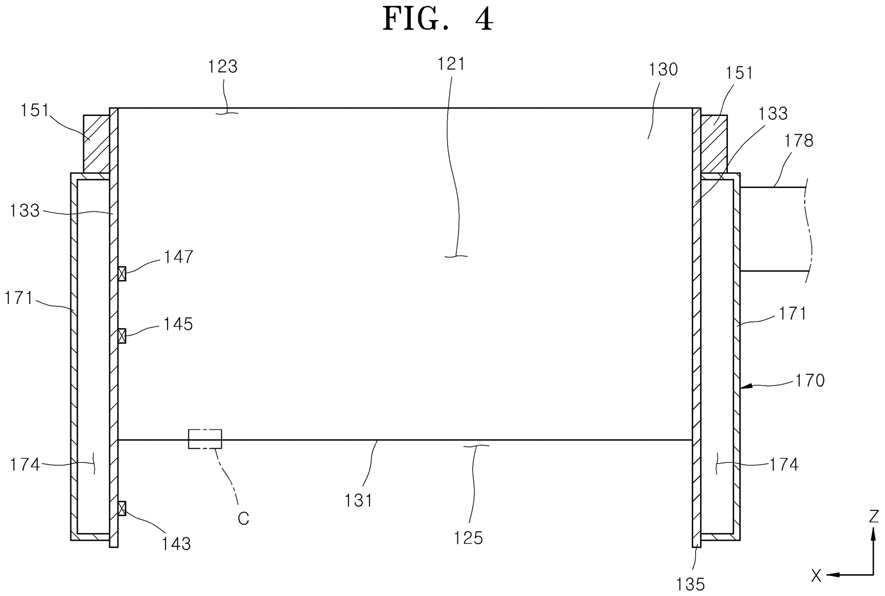

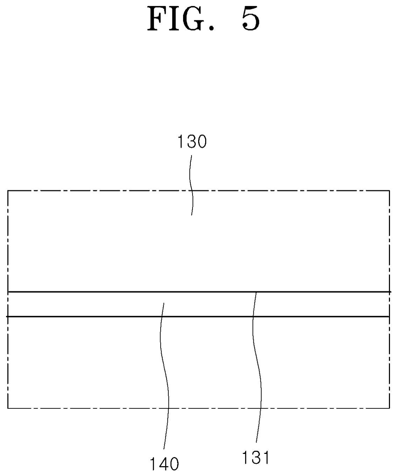

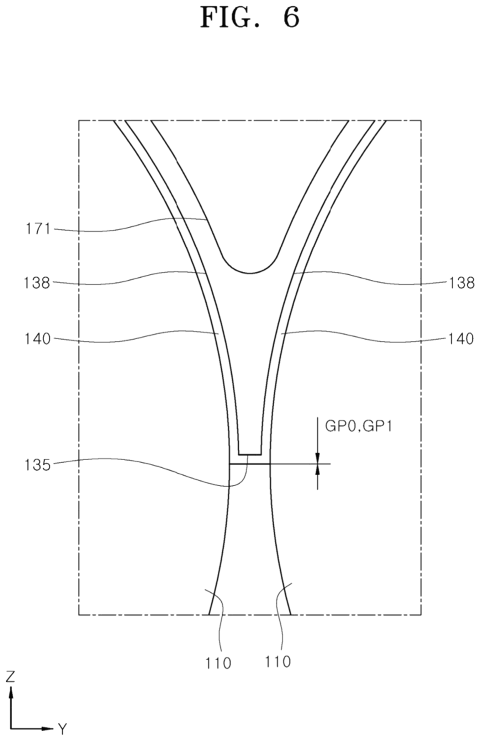

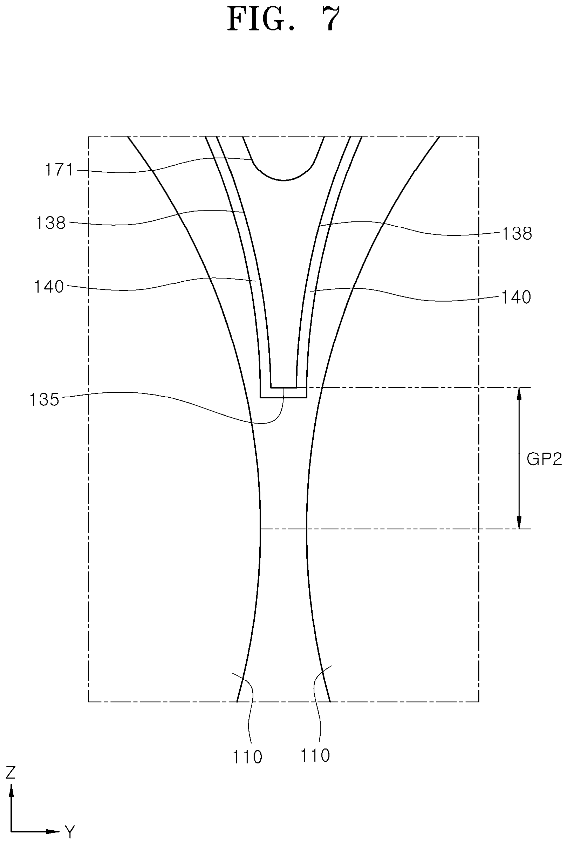

FIG. 1 is a configuration diagram illustrating a dry electrode fabricating apparatus according to an embodiment of the present invention; and FIG. 2 is a perspective view illustrating a chute and a pair of calender rolls of the dry electrode fabricating apparatus of FIG. 1. FIG. 3 is an enlarged view illustrating a region "B" of FIG. 2; and FIG. 4 is a cross-sectional view illustrating the chute and a cooling jacket along the line S1-S1 of FIG. 2. FIG. 5 is an enlarged view illustrating a region "C" of FIG. 4; and FIG. 6 is an enlarged view illustrating a region "A" of FIG. 1, which illustrates a state in which a chute-calender roll distance is a reference distance. FIG. 7 is a view corresponding to FIG. 5, which illustrates a state in which the chute-calender roll distance increases further than the reference distance.

Referring to FIGS. 1 to 7, a dry electrode fabricating apparatus 100 according to an embodiment of the present invention is an apparatus for fabricating a dry electrode 10 including an electrode film 15 and an electrode body 11 to which the electrode film 15 is attached and by which the electrode film 15 is supported.

An electrode powder 1, in which an electrode active material, a conductive material, and a binder are mixed, may pass between a pair of calender rolls 110 and may be compressed thereby to fabricate the electrode film 15. For example, the electrode body 11 may be a foil formed of a metal material, such as copper, but is not limited thereto.

The dry electrode fabricating apparatus 100 includes a chute 120, the pair of calender rolls 110, a temperature sensor 143, a chute moving part 150, and a controller 195. The chute 120 includes an inner space 121 in which the electrode powder 1 is accommodated, an inlet port 123 through which the electrode powder 1 is input to the inner space 121, and an outlet port 125 through which the electrode powder 1 is discharged from the inner space.

The chute 120 includes a pair of first walls 130 and a pair of second walls 133 which define the inner space 121. The first walls 130 are spaced to face each other in a direction in which the pair of calender rolls 110 are arranged, and the second walls 133 are spaced to face each other in a longitudinal direction of the pair of calender rolls 110. The inner space 121 of the chute 120, of which, in an embodiment, a cross-sectional shape is a rectangular shape, may be defined by the pair of first walls 130 and the pair of second walls 133. An open upper side and an open lower side of the chute 120 may be the inlet port 123 and the outlet port 125.

The pair of calender rolls 110 are disposed in parallel such that a gap 115 is formed between the pair of calender rolls 110. The electrode powder 1 discharged through the outlet port 125 may pass through the gap 115 between the pair of calender rolls 110 and may be compressed into the electrode film 15, and the electrode film 15 may be discharged downward from the pair of calender rolls 110.

The pair of calender rolls 110 extend in a first direction. The gap 115 may be formed between the pair of calender rolls 110. If the electrode powder 1 is heated while passing through the gap 115, the electrode powder 1 may be agglomerated due to an action of the binder included in the electrode powder 1 and compressed by the pair of calender rolls 110 to form the electrode film 15.

In an embodiment, the pair of calender rolls 110 may include a heater (not shown) therein which emits heat to reliably agglomerate the electrode powder 1 passing through the gap 115. For example, the heater may heat the calender rolls 110 such that outer circumferential surfaces of the calender rolls 110 generate heat at a temperature in a range from 80 to 180 °C, but is not limited thereto.

Each of the second walls 133 may include a pair of curved corners 138 and a central protrusion 135. The pair of curved corners 138 and the central protrusion 135 may be provided in a lower end portion of the second wall 133 in a third direction. Each of the pair of curved corners 138 may have a curvature corresponding to a curvature of each of the outer circumferential surfaces of the pair of calender rolls 110. The pair of curved corners 138 are concavely recessed and face the pair of calender rolls 110.

The central protrusion 135 may protrude toward the gap 115 between the pair of calender rolls 110. For example, the central protrusion 135 may protrude downward between the pair of curved corners 138 to be parallel to the third direction. In an embodiment, shapes of the pair of curved corners 138 may be symmetrical to each other with respect to the central protrusion 135 interposed therebetween.

The chute 120 may include a protection layer 140 which is stacked on the pair of curved corners 138 and the central protrusion 135 to prevent or substantially prevent damage to the pair of calender rolls 110. In an embodiment, the pair of second walls 133 may include the protection layer 140 stacked on the lower end portion to have a certain (e.g., predetermined) thickness. The pair of first walls 130 may include the protection layer 140 stacked on a lower corner 131 to have a certain (e.g., predetermined) thickness.

In an embodiment, for example, the protection layer 140 may include a fluorine-based resin such as polytetrafluoroethylene (PTFE) or rubber. The protection layer 140 may be formed of the fluorine-based resin such as PTFE or a rubber material. Advantageously, the protection layer 140 prevents or substantially prevents the electrode powder 1 from leaking to the outside of the chute 120 through a gap between the curved corners 138 and the outer circumferential surfaces of the calender rolls 110.

The inlet port 123 and the outlet port 125 are disposed in the third direction. The third direction may be perpendicular to the first direction and a second direction. The second direction may be a direction perpendicular to a pair of axes RX extending in the longitudinal direction of the pair of calender rolls 110. For example, the third direction may be a vertical direction parallel to a direction of gravity.

For example, the first direction and the second direction may be a horizontal direction perpendicular to the direction of gravity. For example, the first direction may be a front-rear direction, and the second direction may be a left-right direction. In FIGS. 1 to 7, the first direction may be a direction parallel to an X-axis, the second direction may be a direction parallel to a Y-axis, and the third direction may be a direction parallel to a Z-axis.

The temperature sensor 143 measures a temperature of the chute 120. For example, the temperature sensor 143 may be installed on the second wall 133 at a level between a level of the central protrusion 135 and a level of the lower corner 131 in the third direction.

The chute moving part 150 supports the chute 120 and moves the chute 120 with respect to the pair of calender rolls 110 to change a chute-calender roll distance GP1 or GP2 between the chute 120 and the pair of calender rolls 110. The chute moving part 150 may include a chute holder 151 and an actuator 156.

The chute 120 is coupled to and supported by the chute holder 151. The actuator 156 provides power for moving the chute holder 151 and the chute 120 supported by the chute holder 151 in the third direction. The actuator 156 may be coupled to the chute holder 151. In an embodiment, for example, the actuator 156 may include an electric motor or a hydraulic cylinder.

If a temperature of the chute 120 measured by the temperature sensor 143 is greater than or equal to a certain (e.g., preset) reference temperature, the controller 195 controls the chute moving part 150 such that the chute-calender roll distance GP1 or GP2 becomes greater than a certain (e.g., preset) reference distance GP0. For example, the controller 195 may control an operation of the actuator 156.

The chute-calender roll distance GP1 or GP2 may have a minimum value of a spaced distance between the outer circumferential surface of the calender roll 110 and the chute 120 in a moving direction of the chute 120. For example, the moving direction of the chute 120 may be parallel to the third direction.

For example, if a virtual straight line extending to be parallel to the third direction crosses a point belonging to the lower corner 131 of the first wall 130 and another point belonging to the outer circumferential surface of the calender roll 110, the chute-calender roll distance GP1 or GP2 may be a minimum distance between the point and the another point.

As another example, if a virtual straight line extending to be parallel to the third direction crosses a point belonging to the curved corner 138 and crosses or is tangent to another point belonging to the outer circumferential of the surface calender roll 110, the chute-calender roll distance GP1 or GP2 may be a minimum distance between the point and the another point.

In an embodiment, for example, the reference distance GP0 may be in a range from 0 to 0.2 mm, but is not limited thereto. When the dry electrode fabricating apparatus 100 starts to operate, the chute-calender roll distance GP1 may be set as a distance the same as the reference distance GP0. The reference distance GP0 may be a minimum value GP1 of the chute-calender roll distance.

In an embodiment, the chute-calender roll distance GP1 or GP2 may be within 5% of a radius RD of the calender roll 110. In other words, a maximum value GP2 of the chute-calender roll distance may be 5% of the radius RD of the calender roll 110.

If the maximum value GP2 of the chute-calender roll distance is greater than 5% of the radius RD of the calender roll 110, a distance between the lower corner 131 of the first wall 130 and the outer circumferential surface of the calender roll 110 and a distance between the curved corner 138 of the second wall 133 and the outer circumferential surface of the calender roll 110 become excessively enlarged, and, accordingly, the electrode powder 1 may leak to the outside of the chute 120 through the distances.

Accordingly, a scrap 17 of two side end portions of the electrode film 15 in a width direction may be excessively enlarged, an amount of the electrode powder 1 which is wasted without being compressed into the electrode film 15 increases, and thus the productivity for the dry electrode 10 may advantageously be reduced.

If a temperature of the chute 120 measured by the temperature sensor 143 is greater than or equal to the reference temperature, the chute-calender roll distance becomes greater than the reference distance GP0. Accordingly, heat transfer from the heated calender roll 110 to the chute 120 is suppressed, and the electrode powder 1 accommodated in the chute 120 is not overheated. Accordingly, the electrode powder 1 is not agglomerated in the chute 120 before passing through the gap 115 between the pair of calender rolls 110 and being compressed and formed into the electrode film 15.

According to the dry electrode fabricating apparatus 100, since the electrode powder 1 is not agglomerated in the inner space 121 of the chute 120, defects of the electrode film 15 and the dry electrode 10 can be reduced.

In a state in which the chute-calender roll distance is greater than the reference distance GP0, when a temperature of the chute 120 is lower than the reference temperature, the controller 195 may control the chute moving part 150 such that the chute-calender roll distance becomes the same as the reference distance GP0.

In the dry electrode fabricating apparatus 100 according to an embodiment of the present invention, when a temperature of the chute 120 is lower than the reference temperature, a chute-calender roll distance is maintained as the minimum distance GP1 which is the same as the reference distance GP0, and when a temperature of the chute 120 is greater than or equal to the reference temperature, the chute 120 moves such that a chute-calender roll distance becomes the maximum distance GP2.

In addition, when a state in which a temperature of the chute 120 is greater than or equal to the reference temperature is maintained, a chute-calender roll distance is maintained as the maximum distance GP2, and when a temperature of the chute 120 is lower than the reference temperature, the chute 120 moves such that a chute-calender roll distance becomes the minimum distance GP1. That is, the chute 120 moves to an initial position such that a chute-calender roll distance becomes the reference distance GP0.

In a dry electrode fabrication apparatus according to another embodiment of the present invention, if a temperature of a chute rises, a chute-calender roll distance may gradually increase in proportion to the increase in temperature. In addition, if a temperature of the chute decreases, a chute-calender distance may gradually decrease in proportion to the decrease in temperature.

In an embodiment, the dry electrode fabricating apparatus 100 may further include a cooling jacket 170. The cooling jacket 170 may allow a refrigerant to flow around the chute 120 to cool the chute 120. In an embodiment, the cooling jacket 170 may include an outer jacket wall 171 which is around (e.g., surrounds) the first wall 130 and the second wall 133 of the chute 120 and is coupled to the first wall 130 and the second wall 133.

A refrigerant flow space 174 may be provided between the first wall 130 and second wall 133 and the outer jacket wall 171. The cooling jacket 170 may further include a refrigerant inlet 176 for providing a flow path through which the refrigerant is supplied to the refrigerant flow space 174 and a refrigerant outlet 178 for providing a flow path through which the refrigerant is discharged from the refrigerant flow space 174 to the outside.

If a temperature of the chute 120 is greater than or equal to the reference temperature, the chute 120 may be quickly cooled by moving such that a chute-calender roll distance becomes the distance GP2 which is greater than the reference distance GP0 and allowing the refrigerant to flow into the refrigerant flow space 174 through the refrigerant inlet 176 to flow in the refrigerant flow space 174 and exchange heat with the chute 120 at the same time. The refrigerant heated by exchanging heat with the chute 120 may be discharged to the outside of the refrigerant flow space 174 through the refrigerant outlet 178.

The chute 120 which is quickly cooled to a temperature which is lower than the reference temperature by the heat exchange with the cooling jacket 170 may be quickly restored to the initial position at which a chute-calender roll distance becomes the same as the reference distance GP0.

For example, the refrigerant may be air or liquid water. A cooling effect if the refrigerant is liquid water may be greater than a cooling effect if the refrigerant is air. As an air condition of a location at which the dry electrode fabricating apparatus 100 is installed is set to be dry, generation of condensate water on the outer jacket wall 171 due to the flow of the refrigerant may be prevented or substantially prevented.

In an embodiment, the dry electrode fabricating apparatus 100 may further include a trimming part, or trimmer, 180 and a scrap suction part 185. The trimming part 180 cuts an end portion of the electrode film 15 in the width direction passing through the gap 115 between the pair of calender rolls 110 to separate the scrap 17 from the electrode film 15.

The width direction of the electrode film 15 may be parallel to the first direction. Two side end portions of the electrode film 15 in the width direction may have boundaries having irregular water wave shapes, and wrinkles may be formed thereon. In an embodiment, the trimming part 180 may include a blade which may cut the electrode film 15.

When the blade stabs two side end portions of the electrode film 15, the electrode film 15 may be cut along a virtual straight line TL parallel to a longitudinal direction of the electrode film 15 to separate the scrap 17 from the electrode film 15.

The scrap suction part 185 suctions the scrap 17 separated from the electrode film 15. When a chute-calender roll distance becomes greater than the reference distance GP0, the controller 195 may control the scrap suction part 185 such that a suction force of the scrap suction part 185 becomes greater than a suction force of the scrap suction part 185 when a chute-calender roll distance is the reference distance GP0.

As a chute-calender roll distance increases, a distance between the curved corner 138 of the second wall 133 and the outer circumferential surface of the calender roll 110 increases, such that a width of the electrode film 15 discharged through the gap 115 may increase, and an amount of the scrap 17 may also increase. Accordingly, the controller 195 may increase a suction force of the scrap suction part 185 which suctions the scrap 17 to prevent or substantially prevent movement of the electrode film 15 from being interfered with by the scrap 17.

In an embodiment, the dry electrode fabricating apparatus 100 may further include a lamination roll 190. The lamination roll 190 attaches the electrode film 15 to a current collector 11 to form the dry electrode 10. In an embodiment, the lamination roll 190 may be provided as a pair of lamination rolls 190. The pair of lamination rolls 190 may be disposed in parallel such that a gap is formed between the pair of lamination rolls 190. The pair of lamination rolls 190 may extend in parallel to the calender rolls 110, such as in parallel to the first direction.

The pair of lamination rolls 190 may be disposed apart from the pair of calender rolls 110. In an embodiment, the current collector 11 and the electrode film 15 are in contact (e.g., close contact) with each other while passing through the gap between the pair of lamination rolls 190 such that the electrode film 15 may be attached to the current collector 11.

In an embodiment, an electrode powder supplier 101 and level detection sensors 145 and 147 may be further included. The electrode powder supplier 101 inputs the electrode powder 1 to the inner space 121 of the chute 120 through the inlet port 123. In an embodiment, the electrode powder supplier 101 may include a vibration and guide plate 105 which vibrates the electrode powder 1 and guides the electrode powder 1 toward the inlet port 123. The vibration and guide plate 105 may obliquely extend downward such that a lower end portion thereof is located on the inlet port 123.

The level detection sensors 145 and 147 detect whether a deposit level at which the electrode powder 1 is deposited in the inner space 121 reaches a certain (e.g., preset) reference level. The electrode powder 1 may be deposited in the inner space 121 in the third direction. For example, if an amount of the electrode powder 1 increases, a deposit level of the electrode powder 1 in the inner space 121 may increase in a plus (+) direction of the Z-axis.

If the level detection sensors 145 and 147 detect that a deposit level of the electrode powder 1 reaches the reference level, the controller may control the electrode powder supplier 101 such that the electrode powder 1 is not input to the inner space 121. Accordingly, the electrode powder 1 may not overflow through the inlet port 123 of the chute 120, and thus a loss and a work delay of the electrode powder 1 may be prevented or substantially prevented.

For example, the level detection sensors 145 and 147 may be contact sensors. In an embodiment, the level detection sensors 145 and 147 may be provided as a plurality of level detection sensors 145 and 147. The plurality of level detection sensors 145 and 147 may be installed at a plurality of points of which levels are different in the third direction in the chute 120. For example, the dry electrode fabricating apparatus 100 may include first and second level detection sensors 145 and 147.

For example, the first level detection sensor 145 may be located further upward than a level of the lower corner 131 by a height HE1 in the third direction. In an embodiment, the height HE1 may be 1/3 to 1/2 of a difference in level between the lower corner 131 and the inlet port 123. The second level detection sensor 147 may be located further upward than the level of the first level detection sensor 145 by a height HE2 in the third direction. In an embodiment, for example, the height HE2 may be in a range from 10 to 40 mm.

For example, the level detection sensors 145 and 147 may be the contact sensors. The level detection sensors 145 and 147 may be installed on an inner surface of the second wall 133.

In an embodiment, if the electrode powder 1 is deposited in the inner space 121 such that a deposit level of the electrode powder 1 reaches the level of the first level detection sensor 145, the first level detection sensor 145 transmits a detection signal to the controller 195, and the controller 195 controls the electrode powder supplier 101 not to supply the electrode powder 1 to the inlet port 123.

In an embodiment, even if a deposit level of the electrode powder 1 reaches the level of the first level detection sensor 145 but is not detected due to a malfunction or defect of the first level detection sensor 145, if the deposit level of the electrode powder 1 reaches the level of the second level detection sensor 147, the second level detection sensor 147 transmits a detection signal to the controller 195, and the controller 195 controls the electrode powder supplier 101 not to supply the electrode powder 1 to the inlet port 123.

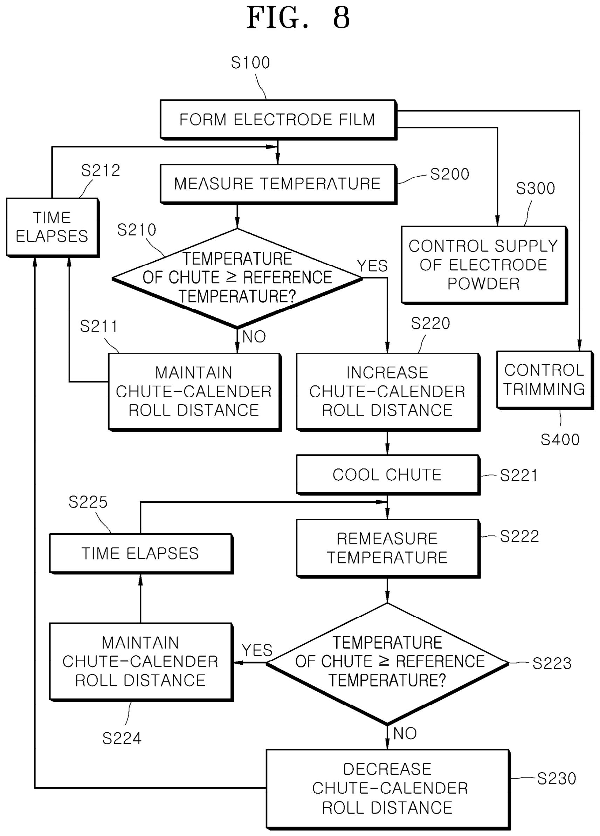

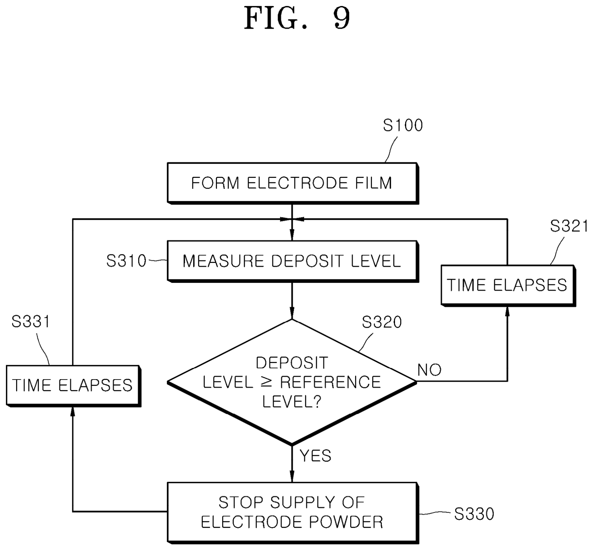

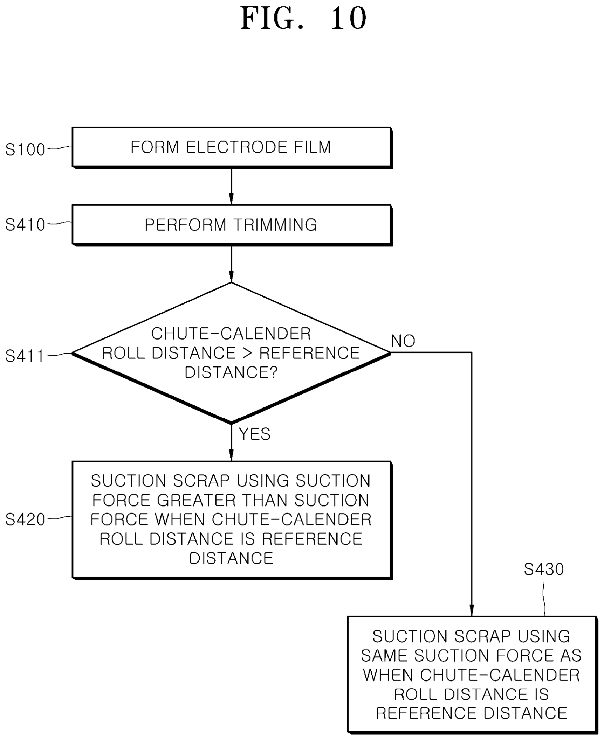

FIG. 8 is a block diagram illustrating a dry electrode fabricating method according to an embodiment of the present invention; and FIG. 9 is a block diagram illustrating an electrode powder supply control operation of FIG. 8. FIG. 10 is a block diagram illustrating a trimming control operation of FIG. 8.

Referring to FIGS. 1 to 8, the dry electrode fabricating method according to an embodiment of the present invention includes an electrode film forming operation S100, a temperature measuring operation S200, and a chute-calender roll distance increasing operation S220. The dry electrode fabricating method according to an embodiment of the present invention may be performed using the dry electrode fabricating apparatus 100 according to an embodiment of the present invention illustrated in FIGS. 1 to 7.

The electrode film forming operation S100 is an operation of discharging the electrode powder 1 accommodated in the inner space 121 of the chute 120 from the chute 120 and allowing the electrode powder 1 to pass through the gap 115 between the pair of calender rolls 110 to form the electrode film 15.

The temperature measuring operation S200 is an operation of measuring a temperature of the chute 120 while forming the electrode film 15. The temperature of the chute 120 may be measured by the temperature sensor 143.

The chute-calender roll distance increasing operation S220 is an operation of, if it is determined that the temperature of the chute 120 is higher than a certain (e.g., preset) reference temperature (S210), moving the chute 120 such that a chute-calender roll distance between the chute 120 and each of the pair of calender rolls 110 becomes greater than a certain (e.g., preset) reference distance.

The chute-calender roll distance increasing operation S220 may be performed by the chute moving part 150 and the controller 195, and since the operation of the chute moving part 150 and the controller 195 has been described above, repeated description thereof will be omitted.

The dry electrode fabricating method may further include a chute cooling operation S221, a temperature remeasuring operation S222, and a chute-calender roll distance decreasing operation S230. The chute cooling operation S221 is an operation of, if a temperature of the chute 120 is higher than the certain reference temperature, allowing the refrigerant to flow around the chute 120 to cool the chute 120.

The chute cooling operation S221 may be performed by the cooling jacket 170 and the controller 195, and, since the operation of the cooling jacket 170 and the controller 195 has been described above, repeated description thereof will be omitted.

The temperature remeasuring operation S222 is an operation of remeasuring a temperature of the chute 120 after the chute-calender roll distance increasing operation S220. The temperature of the chute 120 may be measured by the temperature sensor 143.

The chute-calender roll distance decreasing operation S230 is an operation of, if the temperature of the chute 120 measured in the temperature remeasuring operation S222 is lower than the reference temperature (S223), moving the chute 120 such that a chute-calender roll distance becomes the same as a reference distance GP0.

The chute-calender roll distance decreasing operation S230 may be performed by the chute moving part 150 and the controller 195 like the chute-calender roll distance increasing operation S220, and since the operation of the chute moving part 150 and the controller 195 has been described above, repeated description thereof will be omitted.

The dry electrode fabricating method may further include chute-calender roll distance maintaining operations S211 and S224. In an embodiment, the chute-calender roll distance maintaining operation S211 performed when the temperature of the chute 120 measured in the temperature measuring operation S200 is lower than the reference temperature (S210) may be an operation of maintaining a chute-calender roll distance at a distance GP1 which is the same as the reference distance GP0. When a certain (e.g., predetermined) time elapses (S212) after the chute-calender roll distance maintaining operation S211, the temperature measuring operation S200 may be repeated. When a certain (e.g., predetermined) time elapses (S212) after the chute-calender roll distance decreasing operation S230, the temperature measuring operation S200 may be repeated.

The chute-calender roll distance maintaining operation S224 performed when the temperature of the chute 120 measured in the temperature remeasuring operation S222 is higher than or equal to the reference temperature (S223) may be an operation of maintaining the chute-calender roll distance at a distance GP2 which is increased to be higher than the reference distance GP0. When a certain (e.g., predetermined) time elapses (S225) after the chute-calender roll distance maintaining operation S224, the temperature remeasuring operation S222 may be repeated.

The dry electrode fabricating method according to an embodiment of the present invention may further include an electrode powder supply control operation S300 and a trimming control operation S400.

Referring to FIGS. 1 to 9, the electrode powder supply control operation S300 may include a deposit level measuring operation S310 and an electrode powder supply stop operation S330. The deposit level measuring operation S310 is an operation of measuring a deposit level of the electrode powder 1 deposited in the inner space 121. The deposit level of the electrode powder 1 may be detected by the level detection sensors 145 and 147.

The electrode powder supply stop operation S330 is an operation of, if the deposit level is higher than the preset reference level (S320), stopping supply of the electrode powder 1 to the inner space 121. The electrode powder supply stop operation S330 may be performed by the electrode powder supplier 101 and the controller 195, and, since the operation of the electrode powder supplier 101 and the controller 195 has been described above, repeated description thereof will be omitted.

When a certain (e.g., predetermined) time elapses (S331) after the electrode powder supply stop operation S330, the deposit level measuring operation S310 may be repeated. In addition, even if the deposit level of the electrode powder 1 is lower than the reference level (S320), the deposit level measuring operation S310 may be repeated after a certain (e.g., predetermined) time elapses (S321).

Referring to FIGS. 1 to 8 and 10, the trimming control operation S400 may include a trimming operation S410 and a scrap suction operation. The trimming operation S410 is an operation of cutting the end portion of the electrode film 15 in the width direction and separating the scrap 17 from the electrode film 15.

The scrap suction operation includes an operation of, if a chute-calender roll distance becomes greater than the reference distance GP0, increasing a suction force for suctioning the scrap 17 to be greater than a suction force if a chute-calender roll distance is the same as the reference distance. In other words, the scrap suction operation may include an operation S420 of, if a chute-calender roll distance is greater than the reference distance GP0 (S411), suctioning the scrap 17 using a suction force which is greater than the suction force if the chute-calender roll distance is the same as the reference distance GP0.

In addition, the scrap suction operation includes an operation S430 of, if a chute-calender roll distance is smaller than the reference distance GP0 (S411), suctioning the scrap 17 using a suction force which is the same as the suction force when the chute-calender roll distance is the same as the reference distance GP0.

The trimming operation S410 and the scrap suction operation may be performed by the trimming part 180, the scrap suction part 185, and the controller 195, and since the operation of the trimming part 180, the scrap suction part 185, and the controller 195 has been described above, repeated description thereof will be omitted.

According to one or more embodiments of the present invention, heat transfer from heated calender rolls to a chute is suppressed, and an electrode powder accommodated in the chute is not overheated. Accordingly, the electrode powder may not be agglomerated in the chute before passing through a gap between a pair of calender rolls and being compressed and formed into an electrode film.

According to one or more embodiments the present invention, an electrode powder is not agglomerated in an inner space of a chute, and defects of an electrode film and a dry electrode can be reduced.

However, aspects and features of the present invention are not limited to those described above and other aspects and features not mentioned will be clearly understood by those skilled in the art from the detailed description provided above.

Although the present invention has been described with reference to some example embodiments and drawings illustrating aspects thereof, the present invention is not limited thereto. Various modifications and variations can be made by a person skilled in the art to which the present invention belongs within the scope of the invention and the claims and equivalents thereto.

## Claims

1. A dry electrode fabricating apparatus (100) comprising:
a chute (120) comprising an inner space (121) in which an electrode powder (1) is accommodated, an inlet port (123) through which the electrode powder (1) is to be input to the inner space (121), and an outlet port (125) through which the electrode powder (1) is to be discharged from the inner space (121);
a pair of calender rolls (110) through which the electrode powder (1) discharged through the outlet port (125) passes and by which the electrode powder (1) is compressed into an electrode film (15);
a temperature sensor (143) to measure a temperature of the chute (120);
a chute moving part (150) to support the chute (120) and configured to move the chute (120) to change a chute-calender roll (110) distance between the chute (120) and each of the pair of calender rolls (110); and
a controller (195) to control the chute moving part (150) such that the chute-calender roll (110) distance becomes greater than a reference distance (GP0) if the temperature of the chute (120) is greater than or equal to a reference temperature.

2. The dry electrode fabricating apparatus (100) as claimed in claim 1, wherein the chute-calender roll (110) distance has a minimum value of a distance at which an outer circumferential surface of the calender roll (110) is spaced apart from the chute (120) in a moving direction of the chute (120).

3. The dry electrode fabricating apparatus (100) as claimed in claim 1 or 2, wherein the chute-calender roll (110) distance increases in proportion to an increase in temperature of the chute (120).

4. The dry electrode fabricating apparatus (100) as claimed in claims 1 to 3, wherein
the chute (120) comprises a curved corner (138) concavely recessed to have a curvature corresponding to a curvature of an outer circumferential surface of the calender roll (110), and
the chute (120) comprises a protection layer (140) which is stacked on the curved corner (138) to prevent damage to the calender roll (110).

5. The dry electrode fabricating apparatus (100) as claimed in claim 4, wherein the protection layer (140) comprises a fluorine-based resin or rubber.

6. The dry electrode fabricating apparatus (100) as claimed in claims 1 to 5, further comprising a cooling jacket (170) configured to allow a refrigerant to flow around the chute (120) to cool the chute (120).

7. The dry electrode fabricating apparatus (100) as claimed in claim 6, wherein the refrigerant comprises air or liquid water.

8. The dry electrode fabricating apparatus (100) as claimed in claims 1 to 7, further comprising:
a trimmer configured to cut an end portion of the electrode film (15) in a width direction and separate a scrap (17) from the electrode film (15); and
a scrap suction part (185) configured to suction the scrap (17).

9. The dry electrode fabricating apparatus (100) as claimed in claims 1 to 8, further comprising:
an electrode powder supplier (101) configured to supply the electrode powder (1) to the inner space (121) through the inlet port (123); and
a level detection sensor to detect whether a deposit level at which the electrode powder (1) is deposited in the inner space (121) reaches a reference level.

10. The dry electrode fabricating apparatus (100) as claimed in claim 9, wherein:
the level detection sensor comprises a plurality of level detection sensors; and
the plurality of level detection sensors are installed at a plurality of points of which levels are different in the chute (120).

11. A dry electrode (10) fabricating method comprising:
an electrode film (15) forming operation of discharging an electrode powder (1) accommodated in an inner space (121) of a chute (120) from the chute (120) and allowing the electrode powder (1) to pass through a gap (115) between a pair of calender rolls (110) to form an electrode film (15);
a temperature measuring operation of measuring a temperature of the chute (120) while forming the electrode film (15); and
a chute-calender roll (110) distance increasing operation of, if the temperature of the chute (120) is greater than a reference temperature, moving the chute (120) such that a chute-calender roll (110) distance between the chute (120) and each of the pair of calender rolls (110) becomes greater than a reference distance (GPO).

12. The dry electrode (10) fabricating method as claimed in claim 11, further comprising a chute (120) cooling operation of, if the temperature of the chute (120) is greater than the reference temperature, allowing a refrigerant to flow around the chute (120) to cool the chute (120).

13. The dry electrode (10) fabricating method as claimed in claim 11 or 12, further comprising:
a temperature remeasuring operation of remeasuring a temperature of the chute (120) after the chute-calender roll (110) distance increasing operation; and
a chute-calender roll (110) distance decreasing operation of, if the temperature of the chute (120) measured in the temperature remeasuring operation is lower than the reference temperature, moving the chute (120) such that the chute-calender roll (110) distance becomes the same as the reference distance (GPO).

14. The dry electrode (10) fabricating method as claimed in claims 11 to 13, further comprising:
a deposit level measuring operation of measuring a deposit level at which the electrode powder (1) is deposited in the inner space (121); and
an electrode powder (1) supply stop operation of, if the deposit level is greater than or equal to a reference level, stopping supply of the electrode powder (1) to the inner space (121).

15. The dry electrode (10) fabricating method as claimed in claims 11 to 14, further comprising:
a trimming operation of cutting an end portion of the electrode film (15) in a width direction and separating a scrap (17) from the electrode film (15); and
a scrap (17) suction operation of suctioning the scrap (17),
wherein the scrap (17) suction operation comprises an operation of, if the chute-calender roll (110) distance becomes greater than the reference distance (GP0), increasing a suction force for suctioning the scrap (17) to be greater than the suction force when the chute-calender roll (110) distance is the reference distance (GPO).
